# EUROPEAN PATENT SPECIFICATION

(11) **EP 4 198 078 B1**
(45) Date of publication and mention of the grant of the patent: **16.04.2025**
(21) Application number: 22176105.9
(22) Date of filing: 30.05.2022
(51) Int. Cl.: C08K 3/22, C08K 3/34, C08K 5/098, C08L 23/06, C08L 23/12, C08L 25/06, C08L 67/02, B41M 5/44

(54) **NOVEL PHOTO- AND BIODEGRADABLE POLYMERS BASED ON PECTIN NANOPARTICLES**
NEUE PHOTO- UND BIOLOGISCH ABBAUBARE POLYMERE BASIEREND AUF PEKTINNANOPARTIKELN
NOUVEAUX POLYMÈRES PHOTO- ET BIODÉGRADABLES À BASE DE NANOPARTICULES DE PECTINE

(30) Priority: 19.12.2021 US 202163291403 P
(43) Date of publication of application: 21.06.2023
(73) Proprietor: Amiri, Sahar, 3148974953 Karaj (IR); Sadeghi-Esfahlani, Nariman, 22391 Hamburg (DE)
(72) Inventor: AMIRI, Sahar, 3148974953 Karaj (IR)
(74) Representative: Kröncke, Rolf

(56) References cited:
- CN-A- 1 267 681
- DATABASE CA [online] CHEMICAL ABSTRACTS SERVICE, COLUMBUS, OHIO, US; 4 May 2001 (2001-05-04), QIAN, XIAOHUI ET AL: "Degradable resin compositions and their manufacture and application", XP002807745, retrieved from STN Database accession no. 2001:315650
- GHATGE SUNIL ET AL: "Biodegradation of polyethylene: a brief review", APPLIED BIOLOGICAL CHEMISTRY, THE KOREAN SOCIETY FOR APPLIED BIOLOGICAL CHEMISTRY, SEOUL, vol. 63, no. 1, 16 May 2020 (2020-05-16), XP037128381, ISSN: 2468-0834, [retrieved on 20200516], DOI: 10.1186/S13765-020-00511-3
- FA WENJUN ET AL: "Performance of photo-degradation and thermo-degradation of polyethylene with photo-catalysts and thermo-oxidant additives", POLYMER BULLETIN, SPRINGER, HEIDELBERG, DE, vol. 77, no. 3, 20 May 2019 (2019-05-20), pages 1417 - 1432, XP037008798, ISSN: 0170-0839, [retrieved on 20190520], DOI: 10.1007/S00289-019-02813-Z
- REDDY MURALI MOHAN ET AL: "Biodegradation of montmorillonite filled oxo-biodegradable polyethylene", JOURNAL OF APPLIED POLYMER SCIENCE, vol. 113, no. 5, 5 September 2009 (2009-09-05), US, pages 2826 - 2832, XP055971732, ISSN: 0021-8995, DOI: 10.1002/app.30327

## Description

In a first aspect, the present invention relates to a additive composition having activity for photo- and bio-degradation of polymers, namely, supporting and promoting bio-degradation and photo-degradation of said polymers, whereby said composition comprises TiO₂ nanoparticles, pectine nanoparticles, Fe₂O₃ nanoparticles, C₁₄ to C₂₀ fatty acid salts, like Ca-stearate, Montmorillonite, like Na-MMT nanoparticles, which may be premixed in the base polymer, whereby said additive composition is typically provided in a powdered form. In a further aspect, the photo- and biodegradable polymer comprising the additive composition according to the present invention, combined with the polymeric base is provided. Moreover, a method for producing said additive composition as well as a method for preparing the photo- and biodegradable polymer composition is described. Finally, articles consisting or comprising the photo- and biodegradable polymer according to the present invention are provided.

### FIELD OF THE INVENTION

Plastics have been one of the most transformative innovations of the modern era and in synergy with petroleum resource developments, have actively shaped our economy and ways of life. However, the unintended consequence of this transformation has been the problem waste and pollution, particularly caused by petroleum-based plastics that barely degrade. Next to climate change, plastic pollution poses a grave planetary problem. Alternative approaches on the production end, so far, offer little effect and prospect; bioplastics fall short of meeting utility requirements despite their higher costs, while oxo-degradable plastics fall short of meeting bio-degradability requirement and are linked with a worse problem: micro-plastics.

In recent decades, alternative approaches have sought to enhance and replace traditional plastics to solve the environmental problem of waste and pollution. These alternatives claim to degrade-biodegrade after their service life in the natural environment. (Bio-)degradation of plastics consists of two, often successive chemical reactions: oxidation and hydrolysis. Oxidation occurs through the influence of catalytic metals, heat, UV light and enzymes. Hydrolysis most often involves biological enzymes and thus closely associated with biodegradation.

One of the earliest alternative approaches has been to add natural compounds such as starch (eg. US5449708A) cellulose (US5288318A), protein (EP1075188A1), or pulps (CN104804449A) to make the plastics degradable. These compounds, however, could not compare with traditional plastics, in terms of technical qualities. They were brittle, absorbed more humidity, were fragrant and prone to germs and could only partially degrade. Further, they were much more expensive to produce, requiring a different set of raw material and infrastructure.

Bioplastics which are based on PLA, PHA and PHB families produced through bacterial fermentation of agricultural by-products and PHA-PHB are directly produced by bacterial metabolism (e. g. US20030236320A1).

However, bioplastics have significant disadvantages compared to traditional plastics, both in terms of their production costs and mechanical properties. Higher production costs are mostly due to expensive raw material and more complicated processes. Bioplastics are also more brittle and thermally unstable with a smaller processing window which makes them not suitable for a variety of key industrial applications such as for injection molding used for food packaging and PPE. Further, bioplastics have higher moisture and gas permeability which gives them an advantage in fresh food packaging applications but due to lower barrier properties makes them not suitable for a broad range of other food and beverage packaging as well as some PPE.

Another alternative to traditional plastics is called "Oxo-(bio-)degradable" which consist of traditional polymers such as High-Density Polyethylene (HDPE) most commonly used in carrier bags, as well as additives called "pro-degradant concentrates"-usually metal compounds. Through such catalytic additives, oxo-(bio-)degradable plastics rely on an abiotic oxidation process that does not necessarily involve biological microorganisms.

These additives catalyze the breakdown process of otherwise resilient polymer structures under certain environmental conditions such as UV and heat, which is why such polymers are also called photo- or thermo-degradable. Under the catalytic influence of light and heat, radicals help break down chemical bonds in a chain reaction that leads to structural disintegration of the polymer matrix. However, it is doubted whether micro-organisms actively contribute to the degradation process and therefore, the term oxo-biodegradable has been long controversial. Later, it has been demonstrated how some additive violate metal standards and that degradation can be inhibited by humidity and cold and even under hot and arid conditions, results have been inconsistent.

After a report brought together all the evidence against oxo-degradable plastics, concluding that they require "much slower timeframes than are required for industrial composting" and thus "not suitable for any form of composting or Anaerobic Digestion process and will not meet current standards [for biodegradability]" the European Union issued a directive and moved to ban the use of all "Oxo-degradable plastics". This report, Pinto Costa, J., Rocha-santos, D. A., & Duarte, T. (2020). The environmental impacts of plastics and micro-plastics use, waste and pollution: EU and national measures. European Union*,* also concluded that Oxo-degradable plastics are most likely to exacerbate issues related to microplastics, particularly due to its incomplete and slow degradation and fragmentation in marine environments. European member states have until 2021 to enact laws and regulations necessary to comply with this directive.

CN 1267681 A refers to a degradable resin composition and production thereof. Ghatge S., et al., Appl. Biol. Chem., 2020, 63 (1) 27, refers to biodegradation of polyethylene: a brief review. Fa. W., et al., Polymer Bulletin, 2020, 77: 1417 - 1432, describes the performance of photo-degradation and thermo-degradation of polyethylene with photo-catalysts and thermo-oxidant additives. In Reddy, M.M., et al., 2009, Journal of Applied Polymer Science, 113, 2826 bis 2832, Biodegradation of montmorillonite filled oxo-biodegradable polyethylene, is discosed.

Nonetheless, industry associations such as the Oxo-biodegradable Plastics Association have been insisting that their products are biodegradable, resisting restrictions through the European Chemicals Agency which has withdrawn its recommendation to ban oxo-degradable plastics, and seeking to challenge the procedure resulting to this directive.

Hence, it is the objective of the present invention to provide suitable photo- and biodegradable polymers, which are basically based on conventional polymers being biodegradable and photo-degradable, fulfilling the ecological requirements on plastics.

Namely, an objective of the present invention is to improve biodegradability of petroleum based plastics by additives improving the photo- and bio-degradability of said polymer due to enhanced and improved activities of said photo- and bio-degradability by increasing the possibility to degrade said polymer by microorganism.

### BRIEF DESCRIPTION OF THE PRESENT INVENTION

In a first aspect, the present invention provides a biodegradable polymer composition with photo- and bio-degradatble activity comprising i) an additive composition:

| | |
|---|---|
| TiO₂ nanoparticles: | 0,01 - 5,00 weight-% by weight of the biodegradable polymer composition; |
| pectin nanoparticles: | 0,01 - 10,00 weight-% by weight of the biodegradable polymer composition; |
| Fe₂O₃ nanoparticles: | 0,02 - 3,00 weight-% by weight of the biodegradable polymer composition; |
| C₁₄ to C₂₀ fatty acid salts, like Ca-stearate: | 0,01 - 6,00 weight-% by weight of the polymer composition; and |
| Montmorillonite, like Na-MMT nanoparticles: | 0,05 - 5,00 weight-% by weight of the biodegradable polymer composition; |
| ii) polymer: | 99,90 - 71 weight-% by weight biodegradable polymer composition. |

In a further aspect, a photo- and biodegradable polymer composition containing an additive composition according to the present invention in an amount of 0,1 to 29,0 weight-% by weight of the polymer composition is provided. Moreover, methods for producing the photo- and biodegradable polymer composition according to the present invention are disclosed comprising the steps of
a) preparing an additive composition comprising TiO₂ nanoparticle, pectin nanoparticles, Fe₂O₃ nanoparticles, Montmorillonite, like Na-MMT, nanoparticles and C₁₄ to C₂₀ fatty acid salts, like Ca-stearate;
b) adding said first composition to the polymer granules as base polymer and
c) mixing the polymeric base with the additive composition in a twin extruder to obtain a photo- and biodegradable polymer composition and
d) optionally pelleting the extrudat.

In case of a nitril rubber and PET based biodegradable polymer composition, a method for producing the photo- and biodegradable polymer according to the present invention comprises the steps of
a) providing the components of an additive composition comprising TiO₂ nanoparticle, pectin nanoparticles, Fe₂O₃ nanoparticles, Montmorillonite, like Na-MMT, nanoparticles and C₁₄ to C₂₀ fatty acid salts, like Ca-stearate;
b) adding the components of said additive composition singly or admixed to the polymerisation solution of nitrile rubber or PET as base polymer and
c) polymerisation of said nitrile rubber or PET,
d) optionally pelleting the polymer of step c).

Finally, articles are provided, comprising the photo- and biodegradable polymer composition according to the present invention or consisting of said photo- and biodegradable polymer composition according to the present invention.

### BRIEF DESCRIPTION OF THE DRAWINGS

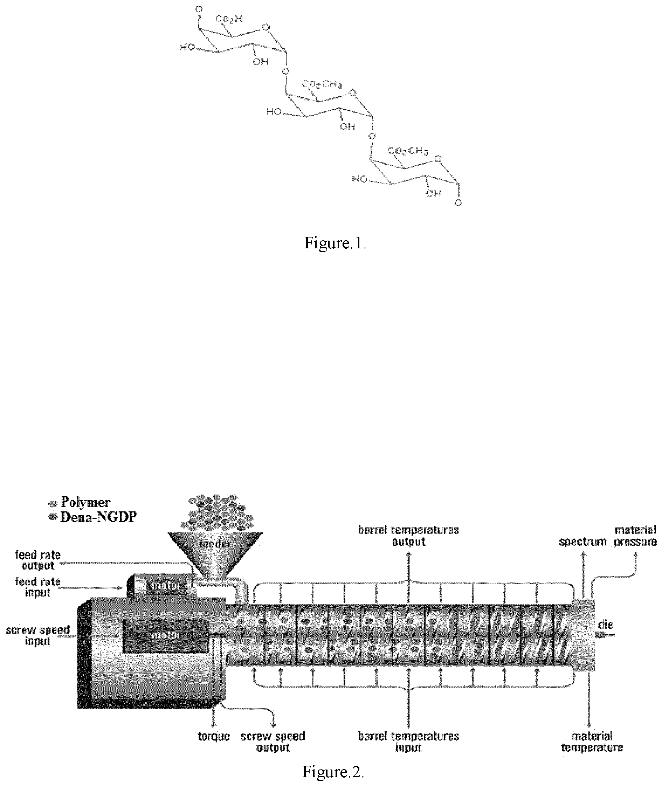

- Figure 1:: Figure 1 shows the chemical structure of pure pectin.
- Figure 2:: Figure 2 shows a schematic route of the additive, referred to as NGDP, mixing process with polymers according to the present invention. For this reason, after mixing polymer base with nanoparticles and formation of NGDP-additive, this additive mixed with specific polymer via a twin extruder to produce biodegradable polymer compositions.

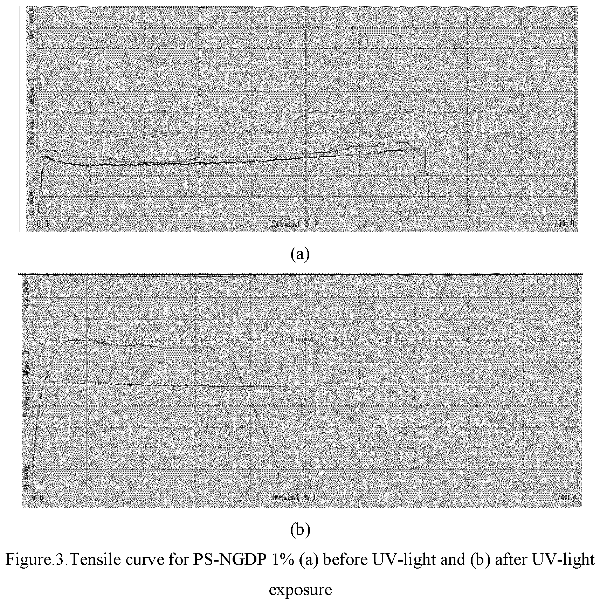

- Figure 3:: Figure 3 shows tensile curve for PS-11c (a) before UV-light and (b) after UV-light exposure. Tensile strength and elongation-at-break were monitored using MTS Instrument model 10-M (USA). Sheets with specific thicknesses, lengths and widths were cut off for exposure. The tests were performed on the samples according to ASTM D D882. The samples were subjected to cross-head speed of 100 mm-min. Five samples were tested for each experiment and the average value was reported.

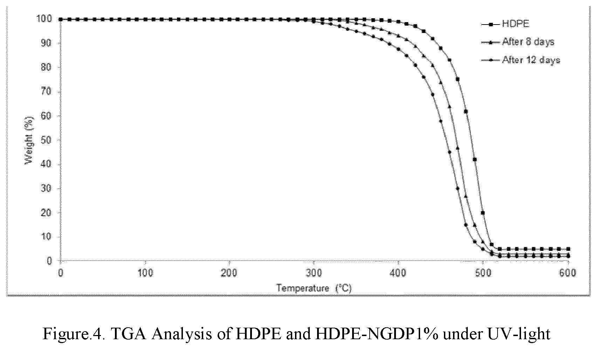

- Figure 4:: Figure 4 shows TGA Analysis of HDPE and HDPE-11 under UV-light. Samples were dried in a vacuum oven at 40°C for 24 hours before the TGA analysis. Weight loss (% and mg) with temperature (°C) and decomposition temperatures of each sample by derivative weight change were recorded.
- Table 1:: Bio-degradability in the presence of UV-light and in the absence of UV-light for polymer films for HDPE-11, HDPE-9, PP-11a, PP-9a
- Table 2:: Bio-degradability in the presence of UV-light and in the absence of UV-light for polymer films for PET-11b and PET-9b
- Table 3:: Overall migration testing for HDPE-11
- Table 4:: Overall migration testing for HDPE-9
- Table.5.: Overall migration testing for PP-11a
- Table.6.: Overall migration testing for PP-9a
- Table.7.: Overall migration testing for PET-11b
- Table.8.: Overall migration testing for PET-9b
- Table.9.: Verification of degradation of disposable glass based on PP-11a (transverse direction)
- Table.10.: Verification of degradation of disposable glass based on PP-11a (Machine Direction)
- Table.11.: Verification of degradation of PET-11b
- Table.12.: Verification of degradation of PET-9b
- Table.13.: Verification of degradation of PS-11c

### DETAILED DESCRIPTION OF THE PRESENT INVENTION

In a first aspect, the present invention relates to a biodegradable polymer composition, also simply referred to polymer, having activity for photo- and biodegradation of the polymer comprising i) an additive composition of:

| | |
|---|---|
| TiO₂ nanoparticles: | 0.01 - 5.00 weight-% by weight of the biodegradable polymer composition; |
| pectin nanoparticles: | 0.01 - 10.00 weight-% by weight of the biodegradable polymer composition; |
| Fe₂O₃ nanoparticles: | 0.02 - 3.00 weight-% by weight of the biodegradable polymer composition; |
| C₁₄ to C₂₀ fatty acid salts, like Ca-stearate: | 0.01 - 6.00 weight-% by weight of the polymer composition; and |
| Montmorillonite, like Na-MMT nanoparticles: | 0.05 - 5.00 weight-% by weight of the biodegradable polymer composition; |
| ii) polymer: | 99.90 - 71 weight-% by weight biodegradable polymer composition. |

According to the present invention, the biodegradable polymer composition is characterized by containing a novel additive composition allowing improved photo- and biodegradability of said polymer composition, in particular, petroleum-based polymers. Namely, the additive composition comprises TiO₂ nanoparticles, pectine nanoparticles, Fe₂O₃ nanoparticles, C₁₄ to C₂₀ fatty acid salts, like Ca-stearate and montmorillonite, like NA-MMT nanoparticles. The novel additive composition according to the present invention may be provided into the polymer as single components or may be provided admixed before.

That is, the additive composition according to the present invention can be added to a variety of polymers; in particular, petroleum-based polymers, allowing to improve photo- and bio-degradation of the same. In particular, the additive composition according to the present invention may be added in low amounts to the base polymer and achieve significant effects.

As used herein, the term "improved biodegradability" refers to any step of biodegradation. The biodegradation includes the initiation of biodegradation as well as quicker biodegradation. In particular, the term "improved biodegradability" refers to the initial start of biodegradation accordingly.

In an embodiment, the additive composition can be added to the polymer in a range of 0.1 to 29 weight-% by weight of the polymer composition. In an embodiment, the amount of the additive present in the photo- and biodegradable polymer is in the range of from 0.5 weight-% to 15 weight-%, like 0.8 weight-% to 10 weight-%, like 1 weight-% to 5 weight-% (by weight of the biodegradable polymer composition).

In an embodiment, the polymer may be a polyoleofin base polymer. In case of the polyoleofin rubbers or polyesters, the additives are added in an amount of 0.2 to 29 weight-% by weight of the polymer composition as mentioned. The amount of the added polymer may depend on the thickness of the final product produced. For example, in case of thin products, like foils or films, the added additive composition may be less.

In particular, in contrast to the presently applied compounds and nanoparticles which are added to, for example thin film polymer to improve bio-degradability and-or photo-degradability, the amount of additives can be less than 1 weight-% by weight of the base polymer since the polymer itself is the major part of the additive composition according to the present invention.

According to the present invention, combining the TiO₂ and Montmorillonite nanoparticles, like the Na-MMT (Na-Montmorillonite), respectively improved photo-as well as biodegradability of the base polymer. This combination in particular allows to catalyse photo-induced degradation processes. Surprisingly, photo-degradation is possible with low amounts of photo-catalyst nanoparticles in contrast to the known products where typically high amounts of additives are added to the base polymer to improve photo- and-or bio-degradability of said polymer.

In the art the components for photo- and bio-degradation are present in the known additives in an amount of more than 30 weight-%, while according to the present invention the additive composition contains the additives, namely, the nanoparticles and the fatty acid salts in a total amount of less than 29 weight-%, based on the final product weight.

Beside the components allowing the photo-degradability of the polymer, the additive composition to be added to the polymer includes pectin nanoparticles in combination with fatty acid salts, e. g. C₁₄ to C₂₀ fatty acid salts, like Ca-stearate. These additives present in the additive composition allows to activate and initiate the bio-degradation of the polymer, in particular, the petroleum-based polymers. It is submitted that the pectin and fatty acid salts allow microorganisms to degrade the polymeric structure which is typically not available for degradation by said microorganism without initial help by said components. The microorganisms suitable for initiating the bio-degradation are microorganisms present normally in the environment, specific microorganisms to be added to allow bio-degradation of the polymer are not required.

As used herein, the C₁₄ to C₂₀ fatty acid salts include satured or non-satured fatty acids with akali metal, earth akali metal or ammonium including stearate-derivatives, like Ca-stearate. As noted, the fatty acid salt is combined with the pectin nanoparticles.
The additives are used in form of nanoparticles unless otherwise indicated. Namely, it has been recognized that the use of nanoparticles is beneficial in view of higher reactivity. The nanoparticles allow to provide higher surface activity and, thus, improve biodegradability as well as photodegradability accordingly. Namely, nano-sized TiO₂ particles show higher photocatalytic reactivity due to a large specific surface area and photogenerated photon transfer (Lee D. et al., Nanomaterials, 2020, 10 (3), 546). Other prior art identifies that particle size of nanomaterials has significant impact on the photocatalytic properties.

In addition, the additive composition according to the present inventions contains Fe₂O₃ nanoparticles.

Each of the components may be used as normal, commercially available products without any particular treatment steps in advance.

The additive composition according to the present invention represents a composition being non-toxic and triggering the degradation accordingly. The additive formula is a combination of nanoparticles including non-toxic, food grade, metaloxides to catalyse photo-degradation as well as to preserve physical properties. In addition, biodegradable lamellar silicates as inorganic fillers to enable hydrolysis and thereby to initiate the bio-degradation process and polysacharides including pectins that can be directly digested by a range of common microorganisms causing the collapse of the polymer chains allowing further microorganisms to degrade the polymer further.

The additive composition according to the present invention contains mixture of nanoparticles which can be added to base polymers such as HDPE, LDPE, PP, PS, PET or nitril rubber.

Alternatively, each of the components in the additive composition may be added singly into the base polymer.
In an embodiment the biodegradable polymer composition consists of:

| | |
|---|---|
| TiO₂ nanoparticles: | 0.50 - 2.00 weight-% by weight of the biodegradable polymer composition; |
| pectin nanoparticles: | 5.00 - 10.00 weight-% by weight of the biodegradable polymer composition; |
| Fe₂O₃ nanoparticles: | 0.05 - 0.2 weight-% by weight of the biodegradable polymer composition; |
| C₁₄ to C₂₀ fatty acid salts, like Ca-stearate | 0.5 - 2.00 weight-% by weight of the biodegradable polymer composition and |
| Montmorillonite, like Na-MMT nanoparticles: | 0.3 - 2.00 weight-% by weight of the biodegradable polymer composition, whereby the remaining consists of the biodegradable polymer up to 100 weight-% of obtained biodegradable polymer composition. |

The Titanium dioxide particles are Titanium dioxide nanoparticles obtainable commercially. For example, suitable Titanium nanoparticles include the aeroxide TiO₂ P25 product of high purity known as a catalyst, which contains nanocrystals of anatase and rutile in the 80:20 weight ratio in particular, known having a high photocatalytic efficiency with the most thermodynamically stable facets of the anatase phase. Modifications of TiO₂ nanoparticles to improve catalytic activity are known in the art.

The pectin nanoparticles being an essential component of the additive composition according to the present invention are also known as pectic polysaccharides being rich in galactoronic acids. According to the present invention, this component is used to initiate the bio-degradation by microorganisms. But not only pectin nanoparticles are suitable but, generally, polysaccharide nanoparticles can be used according to the present invention. Namely, the polysaccharide nanoparticles combined with the fatty acid component initiate bio-degradation by microorganisms. The skilled person is well aware of suitable polysaccharides nanoparticles beside pectin nanoparticles as particularly described herein.

The Fe₂O₃ nanoparticles to be used according to the present invention are typically commercially available nanoparticles. The nanoparticles improve physical and mechanical properties of the additive composition.

The Montmorillonite, in particular, the Na-MMT nanoparticles consist of about 1 nm thick aluminosilicate layers surface-substituted with meta-cations and stacked in about 10 µm sized multilayer stacks. Depending on surface modification of the clay layers, Montmorillonite can be dispersed in a polymer matrix to form polymer clay nanocomposite. Within the nanocomposite individual nanometre thick clay layers become fully separated to form plate like nanoparticles with very high aspect ratio. Suitable Montmorillonite nanoparticles are commercially available. In an embodiment, Na-MMT nanoparticles are used.

The additive composition may be in form of a powder or pelletized.

That is, in an aspect of the present invention a method for producing a photo- and biodegradable polymers according to the present invention is provided, comprising the steps of
a) mixing the nanoparticles of TiO₂, pectin, Fe₂O₃ and Montmorillonite, like Na-MMT, with, C₁₄ to C₂₀ fatty acid salt, like Ca-stearate to obtain an additive composition;
b) mixing the additive composition obtained in step a) with the base polymer to obtain a homogenous polymer mixture,
c) extruding the same, and
d) optionally pelleting the extrudat.

For example, in case the polymer is a nitril rubber-based polymer or a PET polymer, the method according to the present invention for producing the additive composition according to the present invention comprises the steps of
a) providing the components of the additive composition as defined herein comprising TiO₂ nanoparticle, pectin nanoparticles, Fe₂O₃ nanoparticles, Na-MMT nanoparticles and, C₁₄ to C₂₀ fatty acid salt, like Ca-stearate;
b) adding the components of said additive composition (step a) singly or admixed to the polymerisation solution of nitrile rubber or the PET polymer and
c) polymerisation of said nitrile rubber or PET polymer,
d) curing the polymer of step c).

Namely, in an embodiment, in a first step an additive composition is prepared, comprising mixing of the nanoparticles of TiO₂, pectin, Fe₂O₃, Montmorillonite, like Na-MMT, and the fatty acid salt, like Ca-stearate. This mixture is added subsequently to the molten polymer, typically, the polymer also representing the polymer base of the photo- and biodegradable polymer according to the present invention and mixing the same preferably, homogenously, into said molten polymer, thus, a preferably homogenous polymer melt is obtained. The apparatus and devices required for mixing the components of the additive except the polymer to obtain the additive composition and, thereafter, mixing the additive composition to the molten polymer to obtain the preferably homogenous polymer melt representing the additive composition according to the present invention is conducted using devices known to the skilled person. Typically, for polyolefines, the mixing of the biodegradable additive composition and the polymer base is done in an extruder, like a twin-screw-extruder. As said, the polymer melt including the additive composition according to the present invention is extruded to obtain the photo and biodegradable polymer mix as an extrudate. Said extrudate may optionally be pelletized further or may be grinded or treated similarly to bring the same into the desired size.

In a further aspect, the present invention provided the photo- and biodegradable polymer comprising the additive composition according to the present invention. The photo- and biodegradable polyolefines including HDPE, LDPE, PP, PS or PET, which includes the additive composition in an amount of 0.1 to 29.00 weight-% by weight of the biodegradable polymer, like in an amount of 0.5 to 5 weight-% by weight of the biodegradable polymer composition.

In particular, it has been recognized that even lower amounts of the additive composition according to the present invention are sufficient to increase and improve photo- and bio-degradability of said polymer composition.

Namely, in an embodiment of the present invention, the photo- and biodegradable polymer comprises the additive composition according to the present invention in an amount of 0.2 to 15.00 weight-% by weight of the biodegradable polymer composition. In another embodiment, the additive composition is mixed to the base polymer in an amount of 0.5 to 5.00 weight-% by weight of the biodegradable polymer composition.

In the case of polyester resins (such as PET) or rubber polymers (such as nitril), based in this invention, the additive composition is directly added to polymer solution in the same range of amounts-however, ideally between 0.2 to 5.00 weight-% by weight of the base polymer.

The photo- and biodegradable polymer composition is characterized in having and demonstrating improved degradability upon photo-activation as well as bio-degradation. Moreover, since the additive composition can be admixed in low amounts and, since the components of the additive composition are typically transparent besides the preservation of other desired physical properties such as tensil strength, permeability and so on favourable properties are obtained. In addition, since the amount of the other components than the polymer is added to the polymer is typically less than 5 weight-% of the base polymer, economical advantages and reduced production costs are possible. Moreover, the burden on the environment is decreased.

In addition, the additive composition according to the present invention can be mixed and compounded with base polymers without any additional industrial processing or infrastructure, which both suits economic advantages compared to other solutions for plastic degradability.

Moreover, the bio-degradation process of the photo- and biodegradable polymer according to the present invention can be initiated in any kind of environment without a necessity for pre-treatment such as UV exposure or solution with water. Various triggers for the bio-degradation process such as reabsorbing metal oxides, water solluable silicates and biodegradable bioplastics each operate independently without the bigger polymer chained to macromolecules that can be digested by microorganisms. Hence, the bio-degradation process according to the present invention based on the additive composition according to the present invention is less dependent on specific environmental conditions such as heat, oxygen and humidity.

Moreover, the ingredients of the additive composition containing titandioxide, pectin, Fe₂O₃, Na-MMT and Ca-stearate should be in a form to be food grade and approved by regulating authorities for safety.

Compared to the polymer not containing the additive composition, the photo- and bio-degradability of the polymer according to the present invention is increased, for example by using 2-3% additive composition, polymers degraded 50-60 times faster.

Further, the provision of essentially full degradability of the polymer is possible, in particular, in case of petroleum-based polymers.

In a further aspect, the present invention relates to a method for preparing the photo- and biodegradable polymer according to the present invention comprising the steps of mixing the polymeric base with the additive composition according to the present invention and producing by polymerisation of the photo- and biodegradable polymer whereby the additive composition is mixed in an amount of 0.1 to 29 weight-% by weight of the polymer composition, preferably in an amount of 0.5 to 5 weight-% by weight of the polymer composition for ideal results. As mentioned, the method for preparing the photo- and biodegradable polymer composition according to the present invention is not restricted and does not require any specific apparatus or steps but can be effected easily.

Moreover, the photo- and biodegradable polymer obtainable by the method according to the present invention is described. Said photo- and biodegradable polymer is characterized in demonstrating increased degradability while remaining other physical properties during use.

Further, the present invention provides articles comprising or consisting of a photo- and biodegradable polymer according to the present invention. Typicaly articles provided include bottles, packaging or the like disposable bags, tablecloth, cutlery, drinking cups, salad cups, plates, overwrap and lamination film, straws, stirrers, lids and cups, plates and containers for food dispensed at delicatessen and fast-food establishments, containers for detergents and shampoos as well as disposables gloves. Namely, packaging like HDPE bottles for milk and water containers, bags, sacks, wraps and lids, detergent bottles, moulded plastic cases, to contain various items.

The present invention will be described further by way of examples, whereby the tables below demonstrate the following:
Table 1 illustrates bio-degradability of HDPE-11, HDPE-9, PP-11a, PP-9a in the presence of UV-light and in the absence of UV-light for polymer films. UV-light exposure accelerates degradation of samples because of presence TiO2 and its photocatalytic activity. Degradation of polymer chains led to formation of shorter chains and oligomers with lower molecular weight which can be involves hydrolysis and oxidation. In the absence of UV-light, also degradation starts and polymeric films degrade to smaller polymeric chains with lower molecular weight chains which is related to presence of pectin and clay which are led to bio-degradability and hydrolysis of polymers, respectively.

Table 2 illustrates bio-degradability of PET-11b and PET-9b in the presence of UV-light and in the absence of UV-light for polymer films. UV-light exposure accelerates degradation of samples because of presence TiO2 and its photocatalytic activity. Degradation of polymer chains led to formation of shorter chains and oligomers with lower molecular weight which can be involves hydrolysis and oxidation. In the absence of UV-light, also degradation starts and polymeric films degrade to smaller polymeric chains with lower molecular weight chains which is related to presence of pectin and clay which are led to bio-degradability and hydrolysis of polymers, respectively.

Table 3 illustrates overall migration testing for HDPE-11 covers all kinds of substances which are transferred from food packaging to food irrespective of the nature and toxicological profile of the substance which are below allowed amount.

Table 4 illustrates overall migration testing for HDPE-9 covers all kinds of substances which are transferred from food packaging to food irrespective of the nature and toxicological profile of the substance which are below allowed amount.

Table 5 illustrates overall migration testing for PP-11a covers all kinds of substances which are transferred from food packaging to food irrespective of the nature and toxicological profile of the substance which are below allowed amount.

Table 6 illustrates overall migration testing for PP-9a covers all kinds of substances which are transferred from food packaging to food irrespective of the nature and toxicological profile of the substance which are below allowed amount.

Table 7 illustrates overall migration testing for PET-11b covers all kinds of substances which are transferred from food packaging to food irrespective of the nature and toxicological profile of the substance which are below allowed amount.

Table 8 illustrates overall migration testing for PET-9b covers all kinds of substances which are transferred from food packaging to food irrespective of the nature and toxicological profile of the substance which are below allowed amount.

Table 9 illustrates degradation of disposable glass based on PP-11a based on decrease tensile strength under UV-light exposure based on ASTM D882 at transverse direction. By determining Yield Stress (MPa), Break Stress (MPa) and Elongation to Break (%) before and after UV-light exposure. These data decreases dramatically under UV light (UVA-UVB: 105W-cm2, 168 hours at room temperature and 70 hours at 60°C) which is accelerated biodegradability process.

Table 10 illustrates degradation of disposable glass based on PP-11a based on decrease tensile strength under UV-light exposure based on ASTM D882 at Machine direction. By determining Yield Stress (MPa), Break Stress (MPa) and Elongation to Break (%) before and after UV-light exposure. These data decreases dramatically under UV light (UVA-UVB: 105W-cm2, 168 hours at room temperature and 70 hours at 60°C) which is accelerated biodegradability process.

Table 11 illustrates degradation of PET-11b based on decrease bending strength under UV-light exposure based on ISO 178. By determining Flexural strength in failure(MPa) and Bending strain in failure (MPa) before and after UV-light exposure. These data decreases dramatically under UV light (UVA-UVB: 40W-cm2, 300 hours at 50°C) which is accelerated biodegradability process. Based on our knowledge this is the first time which PET degredaded under UV light and act as degradable plastics.

Table 12 illustrates degradation of PET-9b and indicated results of Table.9. This table showed that by decreasing biodegradable additive (NGDP), degradation percent decreased.

Table 13 illustrates degradation of PS-11c based on decrease tensile strength under UV-light exposure based on ASTM D882. By determining Yield Stress (MPa), Break Stress (MPa) and Elongation to Break (%) before and after UV-light exposure. These data decreases dramatically under UV light (UVA-UVB: 105 W-cm2, 300 hours at 50°C) which is accelerated biodegradability process.

The examples provided below illustrate the invention further without limiting the same thereto:
In the following, examples are provided showing biodegradation of polymer containing the additive compositions.

As used herein, the identification "NGDP" refers to the presence of the additive composition. That is, e. g. HDPE-NGDP refers to a HDPE film containing the resepective additive composition as described in the example accordingly.

### Example 1: HDPE- 1

Photo and biodegradable polymers containing 0. 5 wt% pectin, 0. 5 wt% TiO₂, 0.25 wt% Fe2O3, 0.25 wt% Na-MMt and 0.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP films and placed in the dark. After 28 days, the amount of weight loss was calculated. The specimens were placed in the dark before the growth of bacteria to remove the effect of light. In *HDPE-1* sample, the weight loss for sample in 28 days was 0.50% weight of films.

### Example 2: HDPE- 2

Photo and biodegradable polymers containing 1.0 wt% pectin, 1.0 wt% TiO₂, 0.5 wt% Fe2O3, 0.5 wt% Na-MMt and 1.0 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP films and placed in the dark. After 28 days, the amount of weight loss was calculated. The specimens were placed in the dark before the growth of bacteria to remove the effect of light. In *HDPE-2* sample, the weight loss for sample in 28 days was 0.80% weight of films.

### Example 3: HDPE- 3

Photo and biodegradable polymers containing 1.5 wt% pectin, 1.0 wt% TiO₂, 0.1 wt% Fe2O3, 0.1 wt% Na-MMt and 1.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP films and placed in the dark. After 28 days, the amount of weight loss was calculated. The specimens were placed in the dark before the growth of bacteria to remove the effect of light. In *HDPE-3* sample, the weight loss for sample in 28 days was 1.15% weight of films.

### Example 4: HDPE- 4

Photo and biodegradable polymers containing 0.6 wt% pectin, 4.1 wt% TiO₂, 1.9 wt% Fe2O3, 4.4 wt% Na-MMt and 5.2 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP films and placed in the dark. After 28 days, the amount of weight loss was calculated. The specimens were placed in the dark before the growth of bacteria to remove the effect of light. In *HDPE-4* sample, the weight loss for sample in 28 days was 1.95% weight of films.

### Example 5: HDPE-5

Photo and biodegradable polymers containing 1.4 wt% pectin, 3.5 wt% TiO₂, 1.5 wt% Fe2O3, 4 wt% Na-MMt and 4.3 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-5* sample, the weight loss for sample in 28 days was 2.26 % weight of films.

### Example 6: HDPE-6

Photo and biodegradable polymers containing 3.1 wt% pectin, 3.1 wt% TiO₂, 0.8 wt% Fe2O3, 3.2 wt% Na-MMt and 3.1 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-6* sample, the weight loss for sample in 28 days was 2.53 % weight of films.

### Example 7: HDPE-7

Photo and biodegradable polymers containing 4.6 wt% pectin, 2.5 wt% TiO₂, 0.2 wt% Fe2O3, 2.5 wt% Na-MMt and 2.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-7* sample, the weight loss for sample in 28 days was 2.75 % weight of films.

### Example 8: HDPE-8

Photo and biodegradable polymers containing 6.1 wt% pectin, 1.4 wt% TiO₂, 0.09 wt% Fe2O3, 1.4 wt% Na-MMt and 1.5 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-8* sample, the weight loss for sample in 28 days was 3.37 % weight of films.

### Example 9: HDPE-9

Photo and biodegradable polymers containing 7.7 wt% pectin, 0.9 wt% TiO₂, 0.08 wt% Fe2O3, 0.9 wt% Na-MMt and 1.0 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-9* sample, the weight loss for sample in 28 days was 3.52 % weight of films.

### Example 10: HDPE-10

Photo and biodegradable polymers containing 8.2 wt% pectin, 0.7 wt% TiO₂, 0.06 wt% Fe2O3, 0.7 wt% Na-MMt and 0.7w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-10* sample, the weight loss for sample in 28 days was 3.85 % weight of films.

### Example 11: HDPE-11

Photo and biodegradable polymers containing 9.3 wt% pectin, 0.5 wt% TiO₂, 0.05 wt% Fe2O3, 0.3 wt% Na-MMt and 0.5 w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(HDPE) and nanoparticles, Bacillus subtilis and pseudomonas which are two of the most important plant growth promoting rhizo bacteria in agriculture, were grown on HDPE-NGDP additive films and placed in the dark. After 28 days, the amount of weight loss was calculated. The specimens were placed in the dark before the growth of bacteria to remove the effect of light. In *HDPE-11* sample, the weight loss for sample in 28 days was 3.94 % weight of films.

### Example 1a: PP- 1a

Photo and biodegradable polymers containing 0.5 wt% pectin, 0.5 wt% TiO₂, 0.25 wt% Fe2O3, 0.25 wt% Na-MMt and 0.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP films and placed in the dark. After 28 days, the amount of weight loss was calculated. The specimens were placed in the dark before the growth of bacteria to remove the effect of light. In *PP-1a* sample, the weight loss for sample in 28 days was 0.45% weight of films.

### Example 2a: PP- 2a

Photo and biodegradable polymers containing 1.0 wt% pectin, 1.0 wt% TiO₂, 0.5 wt% Fe2O3, 0.5 wt% Na-MMt and 1.0 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP films and placed in the dark. After 28 days, the amount of weight loss was calculated. The specimens were placed in the dark before the growth of bacteria to remove the effect of light. In *PP-2a* sample, the weight loss for sample in 28 days was 0.65% weight of films.

### Example 3a: PP-3a

Photo and biodegradable polymers containing 1.5 wt% pectin, 1.0 wt% TiO₂, 0.1 wt% Fe2O3, 0.1 wt% Na-MMt and 1.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP films and placed in the dark. After 28 days, the amount of weight loss was calculated. The specimens were placed in the dark before the growth of bacteria to remove the effect of light. In *PP-3a* sample, the weight loss for sample in 28 days was 0.95% weight of films.

### Example 4a: PP-4a

Photo and biodegradable polymers containing 0.6 wt% pectin, 4.1 wt% TiO₂, 1.9 wt% Fe2O3, 4.4 wt% Na-MMt and 5.2 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP additive films and placed in the dark. After 28 days, the amount of weight loss was calculated. The specimens were placed in the dark before the growth of bacteria to remove the effect of light. In *PP-4a* sample, the weight loss for sample in 28 days was 1.75% weight of films.

### Example 5a: PP-5a

Photo and biodegradable polymers containing 1.4 wt% pectin, 3.5 wt% TiO₂, 1.5 wt% Fe2O3, 4 wt% Na-MMt and 4.3 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP additive films and placed in the dark. After 28 days, the amount of weight loss was calculated. The specimens were placed in the dark before the growth of bacteria to remove the effect of light. In *PP-5a* sample, the weight loss for sample in 28 days was 1.92 % weight of films.

### Example 6a: PP-6a

Photo and biodegradable polymers containing 3.1 wt% pectin, 3.1 wt% TiO₂, 0.8 wt% Fe2O3, 3.2 wt% Na-MMt and 3.1 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP additive films and placed in the dark. After 28 days, the amount of weight loss was calculated. The specimens were placed in the dark before the growth of bacteria to remove the effect of light. In *PP-6a* sample, the weight loss for sample in 28 days was 2.14 % weight of films.

### Example 7a: PP-7a

Photo and biodegradable polymers containing 4.6 wt% pectin, 2.5 wt% TiO₂, 0.2 wt% Fe2O3, 2.5 wt% Na-MMt and 2.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP additive films and placed in the dark. After 28 days, the amount of weight loss was calculated. The specimens were placed in the dark before the growth of bacteria to remove the effect of light. In *PP-7a* sample, the weight loss for sample in 28 days was 2.42 % weight of films.

### Example 8a: PP-8a

Photo and biodegradable polymers containing 6.1 wt% pectin, 1.4 wt% TiO₂, 0.09 wt% Fe2O3, 1.4 wt% Na-MMt and 1.5 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP-NGDP additive films and placed in the dark. After 28 days, the amount of weight loss was calculated. The specimens were placed in the dark before the growth of bacteria to remove the effect of light. In *PP-8a* sample, the weight loss for sample in 28 days was 2.95 % weight of films.

### Example 9a: PP-9a

Photo and biodegradable polymers containing 7.7 wt% pectin, 0.9 wt% TiO₂, 0.08 wt% Fe2O3, 0.9 wt% Na-MMt and 1.0 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP/NGDP additive films and placed in the dark. After 28 days, the amount of weight loss was calculated. The specimens were placed in the dark before the growth of bacteria to remove the effect of light. In *PP-9a* sample, the weight loss for sample in 28 days was 3.23 % weight of films.

### Example 10a: PP-10a

Photo and biodegradable polymers containing 8.2 wt% pectin, 0.7 wt% TiO₂, 0.06 wt% Fe2O3, 0.7 wt% Na-MMt and 0.7w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP/NGDP additive films and placed in the dark. After 28 days, the amount of weight loss was calculated. The specimens were placed in the dark before the growth of bacteria to remove the effect of light. In *PP-10a* sample, the weight loss for sample in 28 days was 3.44 % weight of films.

### Example 11a: PP-11a

Photo and biodegradable polymers containing 9.3 wt% pectin, 0.5 wt% TiO₂, 0.05 wt% Fe2O3, 0.3 wt% Na-MMt and 0.5 w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PP) and nanoparticles, Bacillus subtilis and pseudomonas which are two of the most important plant growth promoting rhizo bacteria in agriculture, were grown on PP/NGDP additive films and placed in the dark. After 28 days, the amount of weight loss was calculated. The specimens were placed in the dark before the growth of bacteria to remove the effect of light. In *PP-11a* sample, the weight loss for sample in 28 days was 3.57 % weight of films.

### Example 1b: PET- 1b

Photo and biodegradable polymers containing 0.5 wt% pectin, 0.5 wt% TiO₂, 0.25 wt% Fe2O3, 0.25 wt% Na-MMt and 0.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET-NGDP films and placed in the dark. After 28 days, the amount of weight loss was calculated. The specimens were placed in the dark before the growth of bacteria to remove the effect of light. In *PET-1b* sample, the weight loss for sample in 28 days was 0.33% weight of films.

### Example 2b: PET- 2b

Photo and biodegradable polymers containing 1.0 wt% pectin, 1.0 wt% TiO₂, 0.5 wt% Fe2O3, 0.5 wt% Na-MMt and 1.0 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET-NGDP films and placed in the dark. After 28 days, the amount of weight loss was calculated. The specimens were placed in the dark before the growth of bacteria to remove the effect of light. In *PET-2b* sample, the weight loss for sample in 28 days was 0.50% weight of films.

### Example 3b: PET-3b

Photo and biodegradable polymers containing 1.5 wt% pectin, 1.0 wt% TiO₂, 0.1 wt% Fe2O3, 0.1 wt% Na-MMt and 1.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET-NGDP films and placed in the dark. After 28 days, the amount of weight loss was calculated. The specimens were placed in the dark before the growth of bacteria to remove the effect of light. In *PET-3b* sample, the weight loss for sample in 28 days was 0.80% weight of films.

### Example 4b: PET-4b

Photo and biodegradable polymers containing 0.6 wt% pectin, 4.1 wt% TiO₂, 1.9 wt% Fe2O3, 4.4 wt% Na-MMt and 5.2 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-4b* sample, the weight loss for sample in 28 days was 0.95% weight of films.

### Example 5b: PET-5b

Photo and biodegradable polymers containing 1.4 wt% pectin, 3.5 wt% TiO₂, 1.5 wt% Fe2O3, 4 wt% Na-MMt and 4.3 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-5b* sample, the weight loss for sample in 28 days was 1.22 % weight of films.

### Example 6b: PET-6b

Photo and biodegradable polymers containing 3.1 wt% pectin, 3.1 wt% TiO₂, 0.8 wt% Fe2O3, 3.2 wt% Na-MMt and 3.1 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-6b* sample, the weight loss for sample in 28 days was 1.47 % weight of films.

### Example 7b: PET-7b

Photo and biodegradable polymers containing 4.6 wt% pectin, 2.5 wt% TiO₂, 0.2 wt% Fe2O3, 2.5 wt% Na-MMt and 2.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-7b* sample, the weight loss for sample in 28 days was 1.79 % weight of films.

### Example 8b: PET-8b

Photo and biodegradable polymers containing 6.1 wt% pectin, 1.4 wt% TiO₂, 0.09 wt% Fe2O3, 1.4 wt% Na-MMt and 1.5 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-8b* sample, the weight loss for sample in 28 days was 2.11 % weight of films.

### Example 9b: PET-9b

Photo and biodegradable polymers containing 7.7 wt% pectin, 0.9 wt% TiO₂, 0.08 wt% Fe2O3, 0.9 wt% Na-MMt and 1.0 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-9b* sample, the weight loss for sample in 28 days was 2.52 % weight of films.

### Example 10b: PET-10b

Photo and biodegradable polymers containing 8.2 wt% pectin, 0.7 wt% TiO₂, 0.06 wt% Fe2O3, 0.7 wt% Na-MMt and 0.7w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-10b* sample, the weight loss for sample in 28 days was 2.75 % weight of films.

### Example 11b: PET-11b

Photo and biodegradable polymers containing 9.3 wt% pectin, 0.5 wt% TiO₂, 0.05 wt% Fe2O3, 0.3 wt% Na-MMt and 0.5 w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PET) and nanoparticles, Bacillus subtilis and pseudomonas which are two of the most important plant growth promoting rhizo bacteria in agriculture, were grown on PET/NGDP additive films and placed in the dark. After 28 days, the amount of weight loss was calculated. The specimens were placed in the dark before the growth of bacteria to remove the effect of light. In *PET-11b* sample, the weight loss for sample in 28 days was 2.96% weight of films.

### Example 1c: PS- 1c

Photo and biodegradable polymers containing 0.5 wt% pectin, 0.5 wt% TiO₂, 0.25 wt% Fe2O3, 0.25 wt% Na-MMt and 0.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS - NGDP films and placed in the dark. After 28 days, the amount of weight loss was calculated. The specimens were placed in the dark before the growth of bacteria to remove the effect of light. In *PS-1c* sample, the weight loss for sample in 28 days was 0.41% weight of films.

### Example 2c: PS- 2c

Photo and biodegradable polymers containing 1.0 wt% pectin, 1.0 wt% TiO₂, 0.5 wt% Fe2O3, 0.5 wt% Na-MMt and 1.0 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS - NGDP films and placed in the dark. After 28 days, the amount of weight loss was calculated. The specimens were placed in the dark before the growth of bacteria to remove the effect of light. In *PS-2c* sample, the weight loss for sample in 28 days was 0.57% weight of films.

### Example 3c: PS-3c

Photo and biodegradable polymers containing 1.5 wt% pectin, 1.0 wt% TiO₂, 0.1 wt% Fe2O3, 0.1 wt% Na-MMt and 1.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS-NGDP films and placed in the dark. After 28 days, the amount of weight loss was calculated. The specimens were placed in the dark before the growth of bacteria to remove the effect of light. In *PS-3c* sample, the weight loss for sample in 28 days was 1.05% weight of films.

### Example 4c: PS-4c

Photo and biodegradable polymers containing 0.6 wt% pectin, 4.1 wt% TiO₂, 1.9 wt% Fe2O3, 4.4 wt% Na-MMt and 5.2 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-4c* sample, the weight loss for sample in 28 days was 1.03 % weight of films.

### Example 5c: PS-5c

Photo and biodegradable polymers containing 1.4 wt% pectin, 3.5 wt% TiO₂, 1.5 wt% Fe2O3, 4 wt% Na-MMt and 4.3 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-5c* sample, the weight loss for sample in 28 days was 1.34 % weight of films.

### Example 6c: PS-6c

Photo and biodegradable polymers containing 3.1 wt% pectin, 3.1 wt% TiO₂, 0.8 wt% Fe2O3, 3.2 wt% Na-MMt and 3.1 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-6c* sample, the weight loss for sample in 28 days was 1.76 % weight of films.

### Example 7c: PS-7c

Photo and biodegradable polymers containing 4.6 wt% pectin, 2.5 wt% TiO₂, 0.2 wt% Fe2O3, 2.5 wt% Na-MMt and 2.5 wt% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-7c* sample, the weight loss for sample in 28 days was 1.95 % weight of films.

### Example 8c: PS-8c

Photo and biodegradable polymers containing 6.1 wt% pectin, 1.4 wt% TiO₂, 0.09 wt% Fe2O3, 1.4 wt% Na-MMt and 1.5 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-8c* sample, the weight loss for sample in 28 days was 2.41 % weight of films.

### Example 9c: PS-9c

Photo and biodegradable polymers containing 7.7 wt% pectin, 0.9 wt% TiO₂, 0.08 wt% Fe2O3, 0.9 wt% Na-MMt and 1.0 t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-9c* sample, the weight loss for sample in 28 days was 2.80 % weight of films.

### Example 10c: PS-10c

Photo and biodegradable polymers containing 8.2 wt% pectin, 0.7 wt% TiO₂, 0.06 wt% Fe2O3, 0.7 wt% Na-MMt and 0.7w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-10c* sample, the weight loss for sample in 28 days was 2.93 % weight of films.

### Example 11c: PS-11c

Photo and biodegradable polymers containing 9.3 wt% pectin, 0.5 wt% TiO₂, 0.05 wt% Fe2O3, 0.3 wt% Na-MMt and 0.5 w t% Ca-stearate were produced using twin screw extruder (PL2100, Brabender, Germany). The temperature profile from hopper to die zone were 165, 170, 175, and 180°C, respectively. Constant screw and pelletizer speeds of 20 and 15 rpm were used, respectively. The blow up ratio (BUR) and draw down ratio were kept constant at 2.5 and 8, respectively. The thickness of film product was in the range of 40-50 µm. To investigate the effect of nanoparticles content on biodegradation rate, the films contained polymer bases(PS) and nanoparticles, Bacillus subtilis and pseudomonas which are two of the most important plant growth promoting rhizo bacteria in agriculture, were grown on PS/NGDP additive films and placed in the dark. After 28 days, the amount of weight loss was calculated. The specimens were placed in the dark before the growth of bacteria to remove the effect of light. In *PS-11c* sample, the weight loss for sample in 28 days was 3.05% weight of films.

**Table 1: Bio-degradability in the presence of UV-light and in the absence of UV-light for polymer films for HDPE-11, HDPE-9 PP-11a, PP-9a**

| Sample | Condition | Tensile strength | | Temperature (°C) | Moisture (%) | Time (per week) |
|---|---|---|---|---|---|---|
| | | MD | CD | | | |
| PP-11a | Bare sample | 120.48 | 82.71 | 25 | 60 | 0 |
| | UV-light | 39.92 | 36.75 | 70 | 20 | 1.9 |
| | Under soil and Uv-light | 76.38 | 69.50 | 70 | 70 | 1.9 |
| PP-9a | Bare sample | 87.42 | 68.76 | 25 | 60 | 0 |
| | UV-light | 25.07 | 23.43 | 70 | 20 | 1.9 |
| | Under soil and Uv-light | 80.24 | 67.29 | 70 | 70 | 1.9 |
| HDPE-11 | Bare sample | 77.98 | 59.99 | 25 | 60 | 0 |
| | UV-light | 51.33 | 30.06 | 70 | 20 | 1.9 |
| | Under soil and Uv-light | 59.75 | 48.97 | 70 | 70 | 1.9 |
| HDPE-9 | Bare sample | 77.08 | 76.38 | 25 | 60 | 0 |
| | UV-light | 65.04 | 42.43 | 70 | 20 | 1.9 |
| | Under soil and Uv-light | 70.20 | 68.65 | 70 | 70 | 1.9 |

**Table 2: Bio-degradability in the presence of UV-light and in the absence of UV-light for polymer films for PET-11b and PET-9b**

| Sample | Condition | Flexural strength in failure(MPa) | Temperature (°C) | Moisture (%) | Time (per week) |
|---|---|---|---|---|---|
| PET-11b | Bare sample | 23.83 | 25 | 60 | 0 |
| | UV-light | 14.45 | 70 | 20 | 2.1 |
| | Under soil and Uv-light | 16.71 | 70 | 70 | 2.1 |
| PET-9b | Bare sample | 19.25 | 25 | 60 | 0 |
| | UV-light | 13.22 | 70 | 20 | 2.3 |
| | Under soil and Uv-light | 15.60 | 70 | 70 | 2.3 |
| Samples were tested under above condition, since the samples were in the form of wires, only brittleness properties were examined, which brittleness improve 20-50%. (20% under soil and Uv-light and 50% under UV-light with sunlight wavelength | | | | | |

**Table 3: Overall migration testing for HDPE-11**

| **No.** | **Specifications** | **Result** | **Accepted range** | **Method** | |
|---|---|---|---|---|---|
| 1 | Color | White | - | - | |
| | Odour | Odorless | - | - | |
| | Shape | Solid sheet | | - | - |
| 2 | Total migeration | Acetic acid 3% | 0.8685 | Max:10 mg-dm² | DIN EN 1186-1,3 |
| | | Ethanol 10% | 0.6948 | | |
| | | Distilled Water | 0.1737 | | |
| | | Ethanol 95% | 1.2195 | | |
| The samples comply with the standards INSO-13737 and INSO-11604 | | | | | |

**Table 4: Overall migration testing for HDPE-9**

| **No.** | **Specifications** | **Result** | | **Accepted range** | **Method** |
|---|---|---|---|---|---|
| 1 | Color | White | | - | - |
| | Odour | Odorless | | - | - |
| | Shape | Solid sheet | | - | - |
| 2 | Total migeration | Acetic acid 3% | 0.7965 | Max:10 mg-dm² | DIN EN 1186-1,3 |
| | | Ethanol 10% | 0.5576 | | |
| | | Distilled Water | 0.1593 | | |
| | | Ethanol 95% | 0.9558 | | |
| The samples comply with the standards INSO-13737 and INSO-11604 | | | | | |

**Table.5. Overall migration testing for PP-11a**

| **No.** | **Specifications** | **Result** | | **Accepted range** | **Method** |
|---|---|---|---|---|---|
| 1 | Color | White | | - | - |
| | Odour | Odorless | | - | - |
| | Shape | Solid sheet | | - | - |
| 2 | Total migeration | Acetic acid 3% | 1.0256 | Max:10 mg-dm² | INSO-13737 |
| | | Ethanol 10% | 0.7692 | | |
| | | Distilled Water | 0.2564 | | |
| | | Ethanol 95% | 1.2820 | | |
| The samples comply with the standards INSO-13737 and INSO-11604 | | | | | |

**Table.6. Overall migration testing for PP-9a**

| **No.** | **Specifications** | **Result** | **Accepted range** | **Method** | |
|---|---|---|---|---|---|
| 1 | Color | White | - | - | |
| | Odour | Odorless | - | - | |
| | Shape | Solid sheet | | - | - |
| 2 | Total migeration | Acetic acid 3% | 0.9112 | Max:10 mg-dm² | INSO-13737 |
| | | Ethanol 10% | 0.6627 | | |
| | | Distilled Water | 0.2485 | | |
| | | Ethanol 95% | 1.1598 | | |
| The samples comply with the standards INSO-13737 and INSO-11604 | | | | | |

**Table.7. Overall migration testing for PET-11b**

| **No.** | **Specifications** | **Result** | | **Accepted range** | **Method** |
|---|---|---|---|---|---|
| 1 | Color | White | | - | - |
| | Odour | Odorless | | - | - |
| | Shape | Solid sheet | | - | - |
| 2 | Total migeration | Acetic acid 3% | 0.9333 | Max:10 mg-dm² | INSO-13737 |
| | | Ethanol 10% | 0.6622 | | |
| | | Distilled Water | 0.1555 | | |
| | | Ethanol 95% | 1.0889 | | |
| The samples comply with the standards INSO-13737 and INSO-11604 | | | | | |

**Table.8. Overall migration testing for PET-9b**

| **No.** | **Specifications** | **Result** | | **Accepted range** | **Method** |
|---|---|---|---|---|---|
| 1 | Color | White | | - | - |
| | Odour | Odorless | | - | - |
| | Shape | Solid sheet | | - | - |
| 2 | Total migeration | Acetic acid 3% | 0.8547 | | |
| | | Ethanol 10% | 0.6838 | Max:10 mg-dm² | INSO-13737 |
| | | Distilled Water | 0.1709 | | |
| | | Ethanol 95% | 1.1966 | | |
| The samples comply with the standards INSO-13737 and INSO-11604 | | | | | |

**Table.9. Verification of degradation of disposable glass based on PP-11a (transverse direction)**

| | Measurement index | | | Result |
|---|---|---|---|---|
| | Yield Stress (MPa) | Before UV-light | | 33.6 |
| Tensile | | After UV-light | | 39.7 |
| strength (TD) | Break Stress (MPa) | Before UV-light | ASTM D882 | 40.1 |
| | | After UV-light | | 35.5 |
| | Elongation to Break (%) | Before UV-light | | 950 |
| | | After UV-light | | 45 |
| UVA-UVB: 105W-cm² | | | | |
| Exposure Time: 168 hours at room temperature and 70 hours at 60°C | | | | |

**Table.10. Verification of degradation of disposable glass based on PP-11a (Machine Direction)**

| | Measurement index | | | Result |
|---|---|---|---|---|
| | Yield Stress (MPa) | Before UV-light | ASTM D882 | - |
| Tensile strength (MD) | | After UV-light | | - |
| | Break Stress (MPa) | Before UV-light | | 96.5 |
| | | After UV-light | | 63.2 |
| | Elongation to Break (%) | Before UV-light | | 115 |
| | | After UV-light | | 28 |
| UVA-UVB: 105W-cm² | | | | |
| Exposure Time: 168 hours at room temperature and 70 hours at 60°C | | | | |

**Table.11. Verification of degradation of PET-11b**

| | Measurement index | | | Result |
|---|---|---|---|---|
| Flexural strength in failure(MPa) | | Before UV-light | | 17.2 |
| | | After UV-light | ISO 178 | 13.8 |
| Bending strain in failure (MPa) | | Before UV-light | | 49.5 |
| | | After UV-light | | 39.5 |
| UVA-UVB: 40W-cm² | | | | |
| Exposure Time: 300 hours at 50°C | | | | |

**Table.12. Verification of degradation of PET-9b**

| | Measurement index | | | Result |
|---|---|---|---|---|
| Flexural strength in failure(MPa) | | Before UV-light | | 12.3 |
| | | After UV-light | ISO 178 | 7.6 |
| Bending strain in failure (MPa) | | Before UV-light | | 31.9 |
| | | After UV-light | | 23.4 |
| UVA-UVB: 40W-cm² | | | | |
| Exposure Time: 300 hours at 50°C | | | | |

**Table.13. Verification of degradation of PS-11c**

| | Measurement index | | | Result |
|---|---|---|---|---|
| | Yield Stress (MPa) | Before UV-light | ASTM D882 | 30.0 |
| Tensile strength (TD) | | After UV-light | | 27.2 |
| | Break Stress (MPa) | Before UV-light | | 37.8 |
| | | After UV-light | | 24.7 |
| | Elongation to Break (%) | Before UV-light | | 634 |
| | | After UV-light | | 154 |
| UVA-UVB(280-400nm): 105 W-cm² | | | | |
| Exposure Time: 300 hours at 50°C | | | | |

## Claims

1. A biodegradable polymer composition having activity for photo- and bio-degradation of polymers comprising i) an additive composition of
| | |
|---|---|
| TiO₂ nanoparticles: | 0.01 - 5.00 weight-% by weight of the biodegradable polymer composition; |
| pectin nanoparticles: | 0.01 - 10.00 weight-% by weight of the biodegradable polymer composition; |
| Fe₂O₃ nanoparticles: | 0,.02 - 3.00 weight-% by weight of the biodegradable polymer composition; |
| C₁₄ to C₂₀ fatty acid salts, like Ca-stearate: | 0.01 - 6.00 weight-% by weight of the polymer composition; and |
| Montmorillonite, like Na-MMT nanoparticles: | 0.05 - 5.00 weight-% by weight of the biodegradable polymer composition; and |
| ii) base polymer: | 99.90 - 71 weight-% by weight biodegradable polymer composition. |

2. The biodegradable polymer composition according to claim 1, wherein the polymer is selected from the group consisting of HDPE, LDPE, PP, PS, PET, or nitrile rubber.

3. The biodegradable polymer composition according to claim 1 or 2 consisting of i) an additive composition of
| | |
|---|---|
| TiO₂ nanoparticles: | 0.50 - 5.0 weight-% by weight of the biodegradable polymer composition; |
| pectin nanoparticles: | 5.00 - 10.00 weight-% by weight of the biodegradable polymer composition; |
| Fe₂O₃ nanoparticles: | 0.05 - 2.00 weight-% by weight of the biodegradable polymer composition; |
| C₁₄ to C₂₀ fatty acid salts, like Ca-stearate: | 0.5 - 5.00 weight-% by weight of the biodegradable polymer composition and |
| Montmorillonite, like Na-MMT nanoparticles: | 0.3 - 5.00 weight-% by weight of the biodegradable polymer composition, and whereby the remaining consists of ii) the base polymer up to 100 weight-% of the |
| biodegradable polymer composition. | |

4. The biodegradable polymer composition according to claim 3 consisting of an additive composition of:
| | |
|---|---|
| TiO₂ nanoparticles: | 0.50 - 2.00 weight-% by weight of the biodegradable polymer composition; |
| pectin nanoparticles: | 5.00 - 10.00 weight-% by weight of the biodegradable polymer composition; |
| Fe₂O₃ nanoparticles: | 0.05 - 0.2 weight-% by weight of the biodegradable polymer composition; |
| C₁₄ to C₂₀ fatty acid salts, like Ca-stearate: | 0.5 - 2.00 weight-% by weight of the biodegradable polymer composition and |
| Montmorillonite, like Na-MMT nanoparticles: | 0.3 - 2.00 weight-% by weight of the biodegradable polymer composition, and |
| whereby the remaining consists of the base polymer up to 100 weight-% by weight of the biodegradable polymer composition. | |

5. A biodegradable polymer composition according to any one of claims 1 to 4 comprising the additive composition in an amount of 0.2 - 15.00 weight-% by weight of the biodegradable polymer composition.

6. The biodegradable polymer composition according to claim 5, comprising the additive composition in an amount of 0.5 - 10.00 weight-% by weight of the biodegradable polymer composition.

7. The biodegradable polymer composition according to claim 5 or 6, comprising the additive composition in an amount of 0.5 - 1.50 or 1.0-5.0 % weight-% by weight of the biodegradable polymer composition.

8. A method for producing a biodegradable polymer composition according to any one of the claims 1 to 7, comprising the steps of
a) mixing the nanoparticles of TiO₂, pectin, Fe₂O₃ and Montmorillonite, like Na-MMT, with C₁₄ to C₂₀ fatty acid salt, like Ca-stearate, obtaining an additive composition;
b) mixing the additive composition obtained in step a) with the base polymer to obtain a homogenous polymer melt,
c) extruding the same, and
d) optionally pelleting the extrudat.

9. A method for producing a biodegradable polymer composition according to any one of the claims 1 to 7, wherein the polymer is nitrile rubber or PRT polymer including the steps of
a) providing the components of the additive composition comprising TiO₂ nanoparticle, pectin nanoparticles, Fe₂O₃ nanoparticles, Montmorillonite, like Na-MMT nanoparticles and, C₁₄ to C₂₀ fatty acid salt, like Ca-stearate;
b) adding the components of the additive composition singly or admixed to the polymerisation solution of nitrile rubber or PET polymer and
c) polymerisation of said nitrile rubber or said PET polymer,
d) optionally pelleting the polymer of step c).

10. Article comprising or consisting of a photo- and biodegradable polymer composition according to any one of the claims 1 to 7.

## Patentansprüche

1. Eine biodegradierbare Polymerzusammensetzung, die ein Aktivität zur Foto- und Biodegration der Polymere aufweist, umfassend
i) eine Additivzusammensetzung von
| | |
|---|---|
| TiO₂ Nanopartikel: | 0,01 - 5,00 Gew-% bezogen auf das Gewicht der biodegradierbaren Polymerzusammensetzung; |
| Pektin Nanopartikel: | 0,01 - 10,00 Gew-% bezogen auf das Gewicht der biodegradierbaren Polymerzusammensetzung; |
| Fe₂O₃ Nanopartikel: | 0,02 - 3,00 Gew-% bezogen auf das Gewicht der biodegradierbaren Polymerzusammensetzung; |
| C₁₄ bis C₂₀ Fettsäuresalz, wie Calciumstearat: | 0,01 - 6,00 Gew-% bezogen auf das Gewicht der biodegradierbaren Polymerzusammensetzung; und Montmorillonit, |
| wie Na-MMT Nanopartikel: | 0,05 - 5,00 Gew-% bezogen auf das Gewicht der biodegradierbaren Polymerzusammensetzung; und |
| ii) Grundpolymer: | 99,00 - 71 Gew-% bezogen auf das Gewicht der Foto- und biodegradierbaren Polymerzusammensetzung. |

2. Die biodegradierbare Polymerzusammensetzung nach Anspruch 1, wobei das Polymer ausgebildet ist aus der Gruppe bestehend aus HDPE, LDPE, PP, PS, PET, oder Nitril-Kautschuk.

3. Die biodegradierbare Polymerzusammensetzung nach Anspruch 1 oder 2 bestehend aus i) einer Additiv-Zusammensetzung aus:
| | |
|---|---|
| TiO₂ Nanopartikel: | 0,50 - 5,0 Gew-% bezogen auf das Gewicht der biodegradierbaren Polymerzusammensetzung; |
| Pektin Nanopartikel: | 5,00 - 10,00 Gew-% bezogen auf das Gewicht der biodegradierbaren Polymerzusammensetzung; |
| Fe₂O₃ Nanopartikel: | 0,05 - 2,00 Gew-% bezogen auf das Gewicht der biodegradierbaren Polymerzusammensetzung; |
| C₁₄ bis C₂₀ Fettsäuresalze, wie Calcium-Stearat: | 0,5 - 5,00 Gew-% bezogen auf das Gewicht der biodegradierbaren Polymerzusammensetzung und Montmorillonit, |
wie Na-MMT Nanopartikel: 0,3 - 5,00 Gew-% bezogen auf das Gewicht der biodegradierbaren Polymerzusammensetzung, und wobei der Rest aus ii) dem Grundpolymer auf 100 Gew-% der biodegradierbaren Polymerzusammensetzung besteht.

4. Die biodegradierbare Polymerzusammensetzung nach Anspruch 3 bestehend aus einer Additivzusammensetzung von:
| | |
|---|---|
| TiO₂ Nanopartikel: | 0,50 - 2,00 Gew-% bezogen auf das Gewicht an biodegradierbarer Polymerzusammensetzung; |
| Pektin Nanopartikel: | 5,00 - 10,00 Gew-% bezogen auf das Gewicht an biodegradierbarer Polymerzusammensetzung; |
| Fe₂O₃ Nanopartikel: | 0,05 - 0,2 Gew-% bezogen auf das Gewicht an biodegradierbarer Polymerzusammensetzung; |
| C₁₄ bis C₂₀ Fettsäuresalze, wie Calcium-Stearat: | 0,5 - 2,00 Gew-% bezogen auf das Gewicht an biodegradierbarer Polymerzusammensetzung und Montmorillonit, |
| wie Na-MMT Nanopartikel: | 0,3 - 2,00 Gew-% bezogen auf das Gewicht an biodegradierbarer Polymerzusammensetzung, und wobei das Verbleibende aus dem Basispolymer besteht bis auf 100 Gew-% bezogen auf das Gewicht einer biodegradierbaren Polymerzusammensetzung. |

5. Biodegradierbare Polymerzusammensetzung nach einem der Ansprüche 1 bis 4 umfassend die Additivzusammensetzung in einer Menge von 0,2 bis 15,00 Gew-% bezogen auf das Gewicht an biodegradierbarer Polymerzusammensetzung.

6. Die biodegradierbare Polymerzusammensetzung nach Anspruch 5, umfassend die Additivzusammensetzung in einer Menge von 0,5 bis 10,00 Gew-% bezogen auf das Gewicht an biodegradierbarer Polymerzusammensetzung.

7. Die biodegradierbare Polymerzusammensetzung nach Anspruch 5 oder 6, umfassend die Additivzusammensetzung in einer Menge von 0,5 - 1,50 oder 1,00 - 5,0 Gew-% bezogen auf das Gewicht an biodegradierbarer Polymerzusammen-setzung.

8. Ein Verfahren zur Herstellung einer biodegradierbaren Polymerzusammensetzung nach einem der Ansprüche 1 bis 7, umfassend die Schritte:
a) Vermischen der Nanopartikel von TiO₂, Pektin, Fe₂O₃ und Montmorillonit, wie Na-MMT, mit C₁₄ bis C₂₀ Fettsäuresalz, wie Calciumstearat, um eine Additivzusammensetzung zu erhalten;
b) Vermischen der Additivzusammensetzung erhalten im Schritt a) mit dem Basispolymer, um eine homogene Polymerschmelze zu erhalten,
c) Extrudieren dieser, und
d) ggf. Pelletieren des Extrudats.

9. Ein Verfahren zur Herstellung einer biodegradierbaren Polymerzusammensetzung nach einem der Ansprüche 1 bis 7, wobei das Polymer ein Nitril-Kautschuk oder ein PET Polymer ist einschließlich der Schritte:
a) Bereitstellen der Komponenten der additiven Zusammensetzung umfassend TiO₂ Nanopartikel, Pektin-Nanopartikel, Fe₂O₃ Nanopartikel, Montmorillonit, wie Na-MMP Nanopartikel und C₁₄ bis C₂₀ Fettsäuresalz, wie Calciumstearat;
b) Hinzufügen der Komponenten der Additivzusammensetzung einzeln oder vermischt zu der Polymerisationslösung von Nitril-Kautschuk oder PET Polymer und
c) Polymerisieren von Nitril-Kautschuk oder dem PET Polymer,
d) ggf. Pelletieren des Polymers gemäß Schritt c).

10. Artikel umfassend oder bestehend aus einer foto- und biodegradierbaren Polymerzusammensetzung nach einem der Ansprüche 1 bis 7.

## Revendications

1. Composition de polymère biodégradable possédant une activité de photodégradation et de biodégradation des polymères, comprenant
i) une composition d'additifs de
nanoparticules de TiO₂ : 0,01 à 5,00 % en poids de la composition de polymère biodégradable ;
nanoparticules de pectine : 0,01 à 10,00 % en poids de la composition de polymère biodégradable ;
nanoparticules de Fe₂O₃ : 0,02 à 3,00 % en poids de la composition de polymère biodégradable ;
sel d'acide gras en C₁₄ à C₂₀, comme le stéarate de Ca : 0,01 à 6,00 % en poids de la composition de polymère biodégradable ; et
montmorillonite, comme les nanoparticules de Na-MMT : 0,05 à 5,00 % en poids de la composition de polymère biodégradable ; et
ii) un polymère de base : 99,90 à 71 % en poids de la composition de polymère photodégradable et biodégradable.

2. Composition de polymère biodégradable selon la revendication 1,
dans laquelle le polymère est choisi dans le groupe constitué de HDPE, LDPE, PP, PS, PET, ou caoutchouc nitrile.

3. Composition de polymère biodégradable selon la revendication 1 ou 2, constituée de
i) une composition d'additifs de
nanoparticules de TiO₂ : 0,50 à 5,0 % en poids de la composition de polymère biodégradable ;
nanoparticules de pectine : 5,00 à 10,00 % en poids de la composition de polymère biodégradable ;
nanoparticules de Fe₂O₃ : 0,05 à 2,00 % en poids de la composition de polymère biodégradable ;
sels d'acides gras en C₁₄ à C₂₀, comme le stéarate de Ca : 0,5 à 5,00 % en poids de la composition de polymère biodégradable, et
montmorillonite, comme les nanoparticules de Na-MMT : 0,3 à 5,00 % en poids de la composition de polymère biodégradable,
le reste étant constitué de ii) polymère de base jusqu'à 100 % en poids de la composition de polymère biodégradable.

4. Composition de polymère biodégradable selon la revendication 3, constituée d'une composition d'additifs de :
nanoparticules de TiO₂ : 0,50 à 2,00 % en poids de la composition de polymère biodégradable ;
nanoparticules de pectine : 5,00 à 10,00 % en poids de la composition de polymère biodégradable ;
nanoparticules de Fe₂O₃ : 0,05 à 0,2 % en poids de la composition de polymère biodégradable ;
sels d'acides gras en C₁₄ à C₂₀, comme le stéarate de Ca : 0,5 à 2,00 % en poids de la composition de polymère biodégradable, et
montmorillonite, comme les nanoparticules de Na-MMT : 0,3 à 2,00 % en poids de la composition de polymère biodégradable,
le reste étant constitué du polymère de base jusqu'à 100 % en poids de la composition de polymère biodégradable.

5. Composition de polymère biodégradable selon l'une des revendications 1 à 4,
comprenant la composition d'additifs en une quantité de 0,2 à 15,00 % en poids de la composition de polymère biodégradable.

6. Composition de polymère biodégradable selon la revendication 5, comprenant la composition d'additifs en une quantité de 0,5 à 10,00 % en poids de la composition de polymère biodégradable.

7. Composition de polymère biodégradable selon la revendication 5 ou 6, comprenant la composition d'additifs en une quantité de 0,5 à 1,50 ou de 1,0 à 5,0 % en poids de la composition de polymère biodégradable.

8. Procédé de préparation d'une composition de polymère biodégradable selon l'une des revendications 1 à 7, comprenant les étapes consistant à
a) mélanger les nanoparticules de TiO₂, de pectine, de Fe₂O₃ et de montmorillonite, comme la Na-MMT, avec un sel d'acide gras en C₁₄ à C₂₀, comme le stéarate de Ca, pour obtenir une composition d'additifs ;
b) mélanger la composition d'additifs obtenue à l'étape a) avec le polymère de base pour obtenir un polymère homogène fondu,
c) extruder ce dernier, et
d) éventuellement, granuler l'extrudat.

9. Procédé de préparation d'une composition polymère biodégradable selon l'une des revendications 1 à 7,
dans laquelle le polymère est un caoutchouc nitrile ou un polymère PRT, comprenant les étapes consistant à
a) fournir les composants de la composition d'additifs comprenant des nanoparticules de TiO₂, des nanoparticules de pectine, des nanoparticules de Fe₂O₃, de la montmorillonite, comme des nanoparticules de Na-MMT, et un sel d'acide gras en C₁₄ à C₂₀, comme le stéarate de Ca ;
b) ajouter les composants de la composition d'additifs, seuls ou mélangés, à la solution de polymérisation du caoutchouc nitrile ou du polymère PET, et
c) polymériser ledit caoutchouc nitrile ou ledit polymère PET,
d) éventuellement, granuler le polymère de l'étape c).

10. Article comprenant ou consistant en une composition polymère photodégradable et biodégradable selon l'une des revendications 1 à 7.
